# EUROPEAN PATENT SPECIFICATION

(11) **EP 2 286 113 B1**
(45) Date of publication and mention of the grant of the patent: **11.06.2014**
(21) Application number: 09765278.8
(22) Date of filing: 17.02.2009
(51) Int. Cl.: F16H 3/72

(54) **CONTINUOUS TRANSMISSION BY PLANETARY GEARHEAD**
KONTINUIERLICHE ÜBERTRAGUNG ÜBER EIN PLANETENGETRIEBE
TRANSMISSION CONTINUE PAR ENGRENAGE PLANÉTAIRE

(30) Priority: 27.03.2008 BR 08014353
(43) Date of publication of application: 23.02.2011
(73) Proprietor: Flores Braum Ballester, José, 90680-570 Porto Alegre (BR); Magistrali Ballester, Adriano, 90680570 Porto Alegre (BR)
(72) Inventor: Flores Braum Ballester, José, 90680-570 Porto Alegre (BR); Magistrali Ballester, Adriano, 90680570 Porto Alegre (BR)
(74) Representative: Wilson Gunn
(86) International application number: PCT/BR2009/000047
(87) International publication number: WO 2009/152590

(56) References cited:
- EP-A1- 1 714 850
- EP-B1- 0 329 741
- DE-A1- 2 004 694
- FR-A- 914 940
- JP-A- 56 156 542
- US-A- 1 382 289
- US-A- 4 973 295

## Description

### Field of the invention

The present invention relates, in general, to the technological field of mechanical transmissions and refers, more specifically, to a transmission developed to change rotations between input (engine rotation) and output (differential, cardan axis or wheels) through one or more planetary gear heads controlled externally by screws. This transmission was developed for use in cars, motorcycles, trucks, bus and any equipment that has a transmission box between engine and output of rotation, including also machines and industrial equipments, like lathe and similars.

### Known State of art

The state of art of this technological field basically comprises tree main types of transmission apparatus: manual transmission, automatic transmission and continuously variable transmissions, like the toroidal CVT. All of this transmission apparatus have the objective of change the speed ratio between the engine and the vehicle wheels as the speed of the car increases or decreases.

Both the manual transmission and the automatic transmission present fixed ratio to each gear. This transmission boxes use a range of gears -- from low to high -- to make more effective use of the engine's torque as driving conditions change. Interlocking toothed wheels are used to transmit and modify rotary motion and torque. A combination of planetary gears creates all of the different gear ratios that the transmission can produce, typically four forward gears and one reverse gear. When this type of transmission cycles through its gears, the driver can feel jolts as each gear is engaged. The gears can be engaged manually or automatically - using hydraulic fluid.

The toroidal CVT - continuously variable transmission - don't have a gear box with a set number of gears. It operates on a system that allows an infinite variability with no discrete steps or shifts. This transmission uses a disc connected to the engine, a second disc connected to the drive shaft and power rollers or wheels located between the discs to transmit power from one disc to the other. The wheels can rotate along two axes and touch the discs in different areas, so a tilt of the wheels changes the gear ratio in a continuous Way.

All these conventional transmission systems have problems and deficiencies. In the set gear boxes - manual or automatic - the main problem occurs in the change of gear, where the acceleration and deceleration of the engine generate a great fuel consumption and constant component consumption. These boxes require the use of complex mechanisms for each gear (forward, neutral and reverse), as well as the use of clutch.

The toroidal CVT, besides the use of a very complex mechanism for each gear, also presents serious problems of component consumption, result of the high friction between discs and wheels, requiring the use of special lubricants. Document US 4973295 shows a continuous variable transmission with one satellite gear head box.

### Summary of the invention

The present invention relates to an innovative conception to change relations of gear in a transmission system, obtained through one or more planetary gear heads connected between the entrance of rotation and exit of rotation. These planetary gear heads are controlled externally by screws and according to their position it's possible to change the gear ratio in a continuous way, without the use of the complex mechanical apparatus or the component consumption that happens in a normal CVT. Through this set of gears is possible to use the input rotation to change the output rotation, finding the best rotation and speed to obtain the greatest fuel economy with the smaller detrition of the engine.

The first objective of the present invention is to provide continuously variable speed ratios (without shift of gear), through a transmission apparatus that can be adapted to any kind of engine, including combustion or electric ones, eliminating the use of clutch and the existence of a complex mechanism for selection of motion forward, neutral and reverse. The proposed invention also eliminates all the thongs, discs or pulleys of the mechanism, as well as the need to use special lubricant.

The second objective of the present invention is obtain the decrease in the number of parts needed to manufacture the transmission, with a correspondent reduction of weight and volume of the same, as well as a reduction of the manufacture costs.

The invention also aims the simplification of the procedures for the user. Once it eliminates the shift of gears and the use of the clutch it makes the act of driving easier.

### Brief description of the drawings

**Figure 1** is a top view of one of the possible embodiments of the present invention.
**Figure 2** is a perspective view of a part of the first embodiment of the invention.
**Figure 3** is a schematic drawing showing the overall operation of the present invention, in which are represented the input rotation of the engine (A), the first satellite gear head box (B), the first planetary gear (C), the second satellite gear head box (D) and the second planetary gear (E), that transmit the movement to the wheels.
**Figure 4** is a schematic drawing of the transmission box in the neutral position.
**Figure 5** is a schematic drawing of the transmission box operating in reverse gear.
**Figure 6** is a schematic drawing of the transmission box operating in forward gear.
**Figures 7 to 9** are comparative graphs of the conventional transmission box and the transmission of the present invention.

### Detailed description of the invention

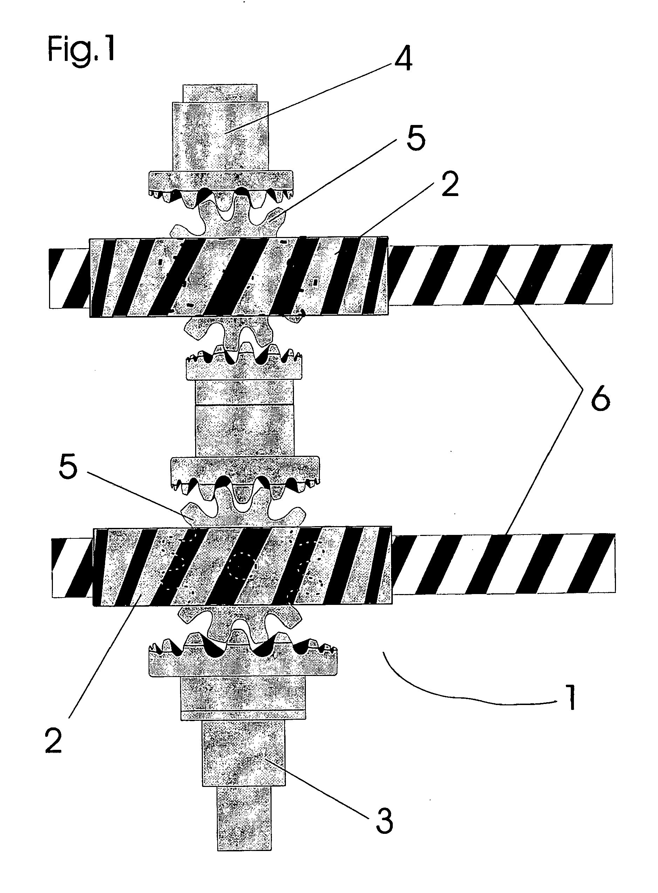

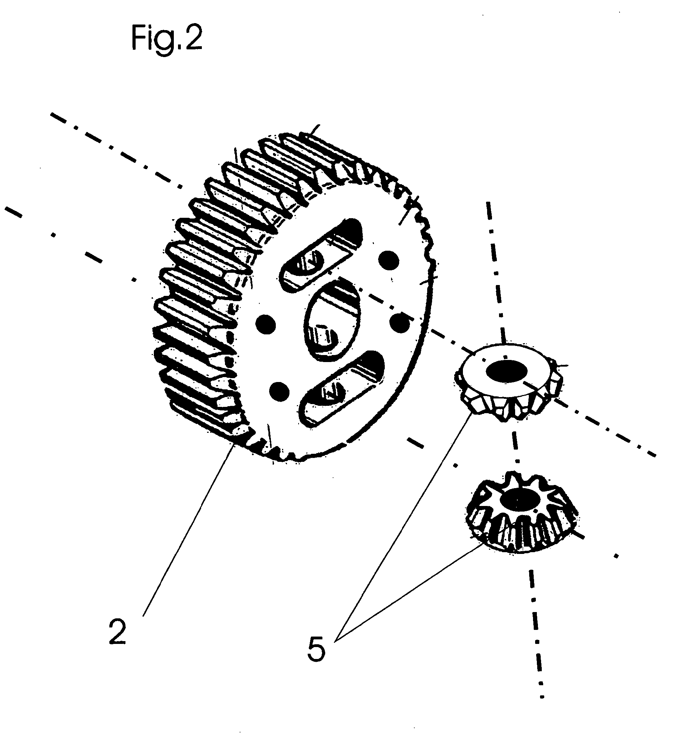

As we can see in the figures 1 and 2 the present invention refers to a mechanical transmission box (1), composed by two satellite gear head boxes (2) connected to the input (3) and output (4) for gears (5). The inversion of the movement increase or decrease of the speed of rotation of the satellite gear head boxes (2) are obtained by screws (6) connected to the same and driven by an electric motor (not shown) or other source of mechanical rotation (like the rotation from the engine or the output of the transmission).

The control of the transmission (1) will be preferably done by a microprocessor, programmed with specific algorithms for each gear of the transmission box (forward, neutral and reverse). This microprocessor controls the source of mechanical rotation that rotates the screws (6) and so controls the direction and speed of rotation, the increase, or decrease or even the reversal of rotation of the satellite gear head boxes (2), obtaining progressive reduction or multiplication movements.

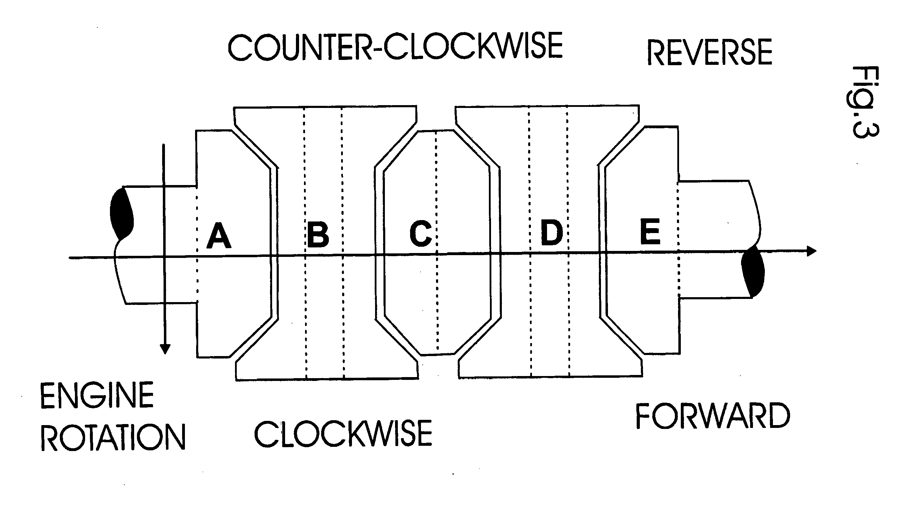

**Figure 3** illustrates in a schematic way the general operation of the invention. The third planet gear (A) receives the input rotation from the vehicle engine. In this particular example: one clockwise turn. The first satellite gear head box (B) is rotated by the external screw and, controls the entire transmission system. If the system of the first satellite gear head box (B) remains stationary, the first planetary gear (C) turns counter-clockwise. If the first satellite gear head (B) system makes a clockwise half turn, the motion of the first planetary gear (C) is null. If the system of the first satellite gear head box (B) makes one complete clockwise turn the first planetary gear (C) will turn two laps counter-clockwise. The second satellite gear head box (D) works in a similar way to the first satellite gear head system (B), influencing the second planetary gear (E) which determines the movement which will be transmitted to the wheels

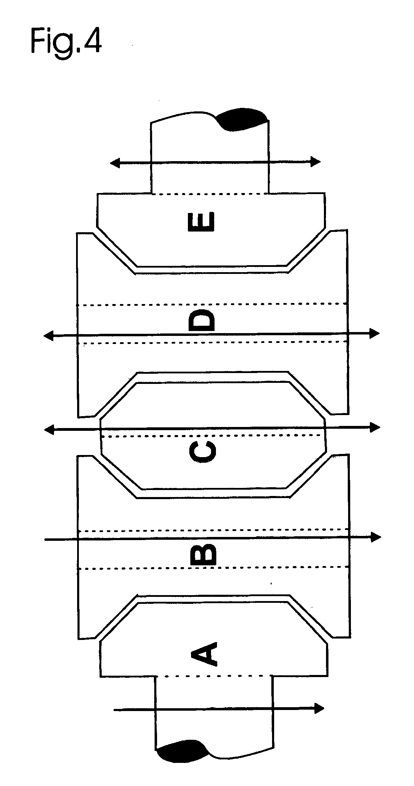

**Figure 4** illustrates the operation of the transmission in the neutral gear. On this example, the third planetary gear (A) - which receives the input rotation from the engine - turns clockwise a complete lap. The first satellite gear head box (B), whose rotation is controlled externally by a screw, turns clockwise only half lap and, as a consequence, the first planetary gear (C) stays still, the second satellite gear head box (D) stays still (as receives no motion of the first planetary gear (C)) and the second planetary gear head box (E) also stays still, not transmitting any motion to the wheels.

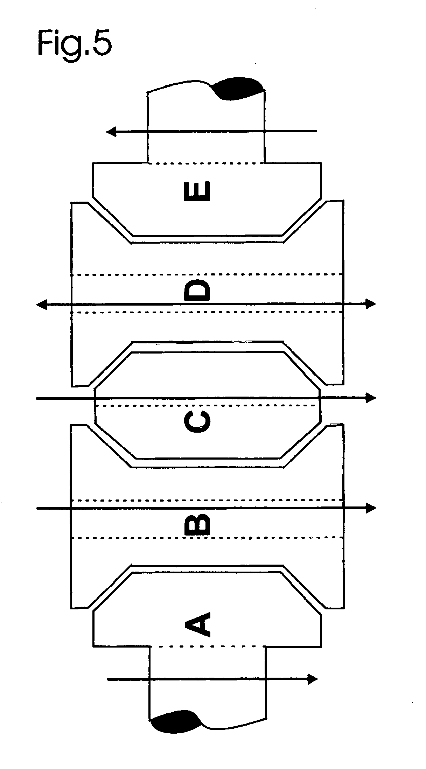

**Figure 5** illustrates the operation of the transmission in the reverse gear. In this example, the third planetary gear (A) turns clockwise one lap. The first satellite gear head box (B) turns clockwise only half lap; the first planetary gear (C) turns only the part commanded by the first satellite gear head box B. The second satellite gear head box (D) stays still and reverses the rotation of the second planetary gear (E) which turns counter-clockwise and provides rotation to reverse gear.

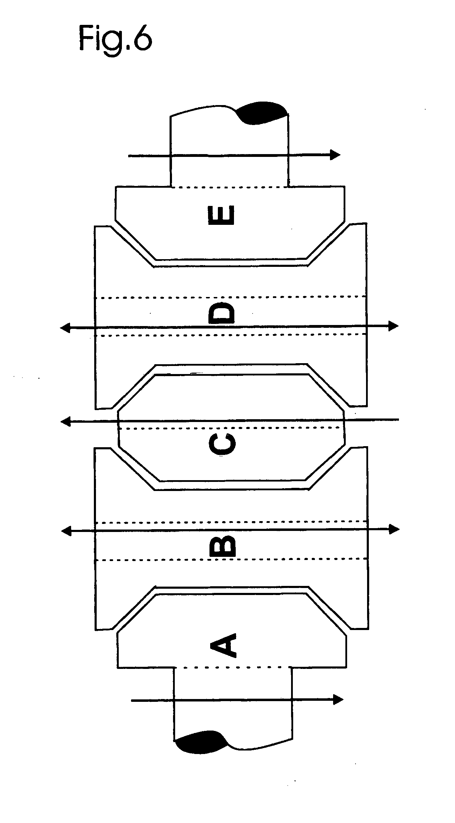

**Figure 6** illustrates the operation of the transmission in the forward gear. The third planet gear (A) turns clockwise. The first satellite gear head box (B) turns clockwise in a decreasing motion and causes an increasing progressive movement in the first planetary gear (C). The second satellite gear head box (D) turns clockwise in a decreasing motion and the second planetary gear (E) provides an increasing clockwise rotation.

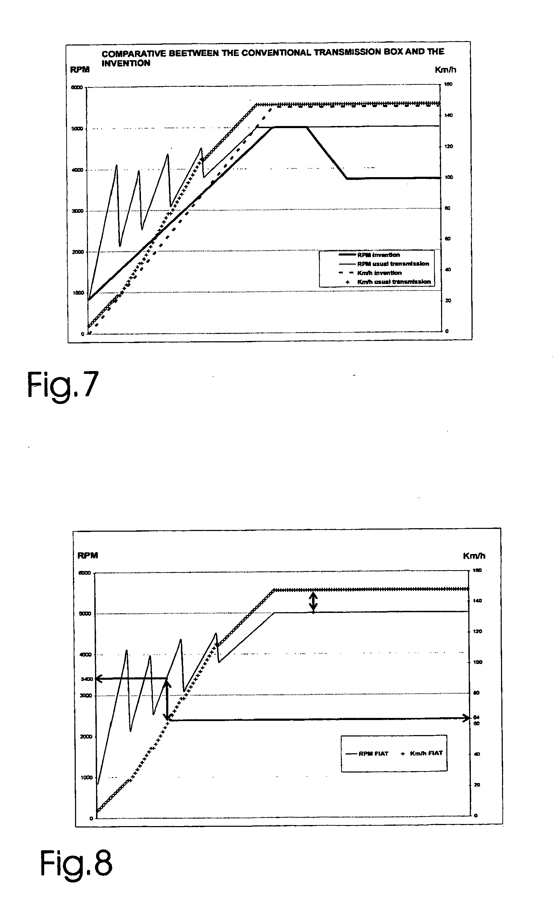

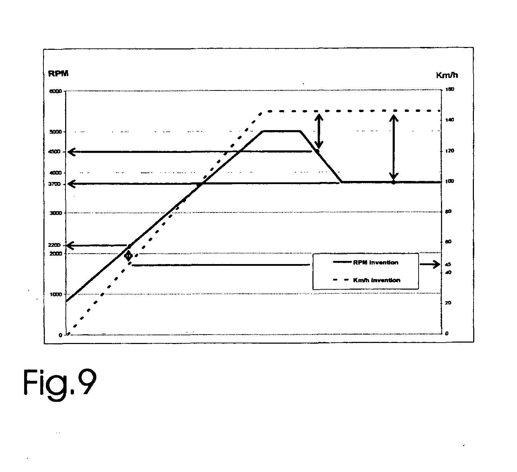

**Figures 7 to 9** are graphs that compare the revealed invention with conventional transmission boxes. In this graphs we can clearly see the greater economy of the proposed transmission. In figure 7 are plotted the RPM and speed of a conventional transmission against the same data for the invention. In figure 8 are plotted only the data of the conventional transmission. In Figure 9 are plotted only the data of the invention.

In the conventional transmission we see the variations that occur in the RPM of the engine as the speed of the vehicle increases, while in the invention the RPM variation of the engine increases in a continuous way as the speed of the vehicle increases. The rotations stabilize in a constant level and suffer a later decrease until reach and maintain another lower constant level.

## Claims

1. Continuous transmission by planetary gearhead, comprising two satellite gear head boxes (2) connected to a transmission input (3) and output (4) by gears (5), where the inversion of the movement, increase or decrease of the speed of rotation of the satellite gear head boxes (2) is obtained by screws (6) connected to the same and controlled externally, wherein the movement of the screws (6) is controlled by a microprocessor programmed with specific algorithms for each gear of the transmission box; **characterized in that** the rotation of a first satellite gear head box (B) by the screw (6), controls the entire transmission system, wherein:
a) a neutral gear is obtained rotating the first satellite gear head box (B) in order to not transmit any movement to the rest of the transmission;
b) a reverse gear is obtained rotating the first satellite gear head box (B) in order to turn a first planetary gear (C) in a way that maintains a second satellite gear head box (D) still, in order to reverse the rotation of a second planetary gear (E);
c) a forward gear is obtained rotating the first satellite gear head box (B) clockwise in a decreasing motion which causes an increasing progressive movement of the first planetary gear (e), so that the system of the second satellite gear head box (D) turns clockwise in a decreasing motion and the second planetary gear (E) provides an increasing clockwise rotation.

## Patentansprüche

1. Kontinuierliches Getriebe durch Planetengetriebe umfassend zwei mit einem Getriebe (3) und Ausgang (4) über Zahnräder (5) verbundene Satellitengetriebekästen (2), wobei die Umkehrung der Bewegung, Ansteigen oder Verminderung der Drehgeschwindigkeit der Satellitengetriebekästen (2) durch an diesen verbundenen und äußerlich gesteuerten Schrauben (6) erhalten wird, wobei die Bewegung der Schrauben (6) durch einen mit spezifischen Algorithmen programmierten Mikroprozessor für jedes Getriebe des Getriebekastens gesteuert wird, dadurch gegenzeichnet, dass die Drehbewegung eines ersten Satellitengetriebekastens (B) über die Schraube (6) das ganze Getriebesystem steuert, wobei:
a) ein Leerlauf beim Drehen des ersten Satellitengetriebekastens (B) erhalten wird, um dem Rest des Getriebes keine Bewegung zu übertragen;
b) ein Rückwärtslauf beim Drehen des ersten Satellitengetriebekastens (B) erhalten wird, um ein erstes Planetengetriebe (C) so zu rotieren, dass es einen zweiten Satellitengetriebekasten (D) unbewegt hält, um die Drehbewegung eines zweiten Planetengetriebes (E) umzukehren;
c) ein Vorwärtslauf beim Drehen des ersten Satellitengetriebekastens (B) im Uhrzeigersinn in einer abnehmenden Bewegung erhalten wird, was eine zunehmend fortlaufende Bewegung des ersten Planetengetriebe (C) zur Folge hat, sodass das System des zweiten Satellitengetriebekastens (D) im Uhrzeigersinn in einer abnehmenden Bewegung rotiert und das zweite Planetengetriebe (E) eine im Uhrzeigersinn zunehmende Drehbegung bereitsellt.

## Revendications

1. La transmission continue au moyen d'une boîte d'engrenages planétaires comprenant deux boîtes d'engrenages satellites (2) reliées à une entrée (3) et à une sortie (4) de transmission au moyen d'engrenages (5), où l'inversion du mouvement augmente ou diminue la vitesse de rotation des boîtes d'engrenages satellites (2), est obtenue au moyen de filetages (6) reliés à cela et contrôlées de l'extérieur, où le mouvement des filetages (6) est contrôlé au moyen d'un microprocesseur programmé à l'aide d'algorithmes spécifiques pour chaque engrenage de la boîte de transmission; **CARACTÉRISÉE par le fait que** la rotation d'une première boîte d'engrenages satellites (B) au moyen du filetage (6) contrôle l'ensemble du système de transmission, où
a) un engrenage neutre est obtenu en faisant tourner la première boîte d'engrenages satellites (B) afin de ne transmettre aucun mouvement au restant de la transmission ;
b) un engrenage inverse est obtenu en faisant tourner la première boîte d'engrenages satellites (B) afin de faire tourner une première boîte d'engrenages planétaires (C) dans une direction qui maintienne immobile une seconde boîte d'engrenages satellites (D), afin d'inverser la rotation d'une seconde boîte d'engrenages planétaires (E) ;
c) un engrenage d'avance est obtenu en faisant tourner la première boîte d'engrenages satellites (B) dans le sens des aiguilles d'une montre selon un mouvement décroissant qui provoque un mouvement progressif croissant de la première boîte de engrenages planétaires (C), de sorte que la seconde boîte d'engrenages satellites (D) tourne dans le sens des aiguilles d'une montre selon un mouvement décroissant et la seconde boîte d'engrenages planétaires (E) fournisse une rotation croissante dans le sens des aiguilles d'une montre.
